# EUROPÄISCHE PATENTSCHRIFT

(11) **EP 2 360 800 B1**
(45) Veröffentlichungstag und Bekanntmachung des Hinweises auf die Patenterteilung: **26.07.2017**
(21) Anmeldenummer: 11000687.1
(22) Anmeldetag: 28.01.2011
(51) Int. Cl.: H02G 3/08

(54) **Installationsteil**
Installation part
Elément d'installation

(30) Priorität: 12.02.2010 DE 202010004188 U
(43) Veröffentlichungstag der Anmeldung: 24.08.2011
(73) Patentinhaber: Kaiser GmbH & Co. KG, 58579 Schalksmuehle (DE)
(72) Erfinder: Kaiser, Burkard, 58509 Lüdenscheid (DE)
(74) Vertreter: Köchling, Conrad-Joachim

(56) Entgegenhaltungen:
- EP-A2- 0 091 012
- DE-B3-102006 037 700
- DE-C- 640 746
- FR-A1- 2 881 288
- US-A- 5 125 527
- US-A1- 2005 092 506
- US-B1- 6 765 147

## Beschreibung

Die Erfindung betrifft ein Installationsteil, insbesondere für elektrische Installationen, zum Einführen oder Durchführen mindestens eines Leerrohres, wobei das Installationsteil mindestens eine Wandung mit mindestens einem durch eine Sollbruchstelle umgrenzten Wandungsbereich aufweist, der durch Heraustrennen des Wandungsbereiches einen Einlass oder Durchlass für ein Leerrohr bildet, wobei der Wandungsbereich mindestens eine Eingriffskontur für ein Werkzeug, insbesondere die Klinge eines Schraubendrehers, zum Ausbrechen des Wandungsbereiches aufweist, wobei der Wandungsbereich eine Versteifung aufweist, mittels derer die Wirkkraft des Werkzeuges in der Eingriffslage auf einen großen Flächenbereich des Wandungsbereiches erstreckt ist.

Aus der DE 10 2006 037 700 B3 ist ein Installationsteil dieser Art in Form einer Einbaudose für elektrische Installationen bekannt. Bei diesem Installationsteil ist in einer Wandung ein durch eine Sollbruchstelle umgrenzter Wandungsbereich vorgesehen, der heraus getrennt werden kann und nach dem Heraustrennen einen Einlass oder Durchlass für ein Leerohr bildet. Im Bereich der Sollbruchstelle weist der Wandungsbereich eine Eingriffskontur für ein Werkzeug, beispielsweise die Klinge eines Schraubendrehers auf, mittels dessen der Wandungsbereich heraus gebrochen werden kann.

Bei einer derartigen Gestaltung hat sich herausgestellt, dass das Herausbrechen eines Wandungsteiles Schwierigkeiten macht, da aufgrund der üblicherweise geringen Wandstärke der Wandung und des Wandungsbereiches bei der entsprechenden Manipulation zwar ein Teilbereich des Wandungsbereiches heraus gebrochen werden kann, jedoch große Teile des herauszubrechenden Wandungsbereiches nicht durch die Bewegung der Klinge des Schraubendrehers heraus gebrochen werden können, so dass eine nachträgliche Manipulation erforderlich wird.

Aus der DE 10 2007 017 201 B3 ist ein Installationssystem bekannt, bei dem ebenfalls eine Wandung vorgesehen ist, aus der mindestens ein Wandbereich heraus gebrochen werden kann. Dazu weist dieser Wandbereich eine umlaufende Sollbruchstelle in Form von Perforationen oder Wandschwächungen auf. Eingriffskonturen für ein Werkzeug, insbesondere die Klinge eines Schraubendrehers, zum Herausbrechen des entsprechenden Wandungsteiles sind dort nicht vorgesehen.

Aus der EP 1 865 583 A1 ist eine Installationsbox bekannt, die herausbrechbare Wandungsteile aufweist, wobei auch dort, ähnlich wie in der erstgenannten Druckschrift eine Eingriffskontur für die Klinge eines Schraubendrehers vorgesehen ist, um den entsprechenden Wandungsbereich herausbrechen zu können.

Hier tritt das gleiche Problem auf, welches bei der erstgenannten Druckschrift geschildert ist. Aus der EP 0378 476 B1 ist eine Installationsdose bekannt, bei der ebenfalls ein Wandungsbereich heraustrennbar ist, der über eine Sollbruchstelle mit der übrigen Wandung verbunden ist. Zum Ausreißen ist hierbei ein Zugelement vorgesehen, so dass mittels Ausüben eines Zuges der herausbrechbare Deckel entfernt werden kann. Diese Manipulation ist insbesondere bei engen Räumen schwierig durchzuführen, wobei zudem nicht sichergestellt ist, dass bei einwirkender Zugkraft auf das Zugelement der Deckel vollständig entfernt wird.

Aus der US 6 765 147 B1 ist ein Installationsteil gemäß Oberbegriff des Anspruchs 1 bekannt. Ein ähnliches Installationsteil ist aus der EP 0 091 012 A2 bekannt.

Ausgehend von dem eingangs genannten Stand der Technik liegt der Erfindung die Aufgabe zugrunde, ein Installationsteil gattungsgemäßer Art zu schaffen, welches einfach und sicher durch Manipulation mittels eines Werkzeuges, insbesondere mittels der Klinge eines Schraubendrehers, es ermöglicht, den von der Sollbruchstelle umgrenzten Wandungsbereich vollständig zu entfernen.

Zur Lösung dieser Aufgabe schlägt die Erfindung vor, dass die Eingriffskontur durch eine napfartige Tasche versteift ist, deren Tiefe der Solleindringtiefe des Werkzeugs entspricht und die Wandung der Tasche, die auch durch einen Boden geschlossen ist, eine Steife bildet, was zu einer wirkungsvollen Kraftübertragung von dem Werkzeug auf den Flächenbereich führt. Demgemäß ist der Wandungsbereich in einem angemessenen Maße versteift, um zu erreichen, dass beim Einsetzen des Werkzeuges in die Eingriffskontur, insbesondere beim Einsetzen der Klinge eines Schraubendrehers, die Kraft auf möglichst weite Bereiche des Wandungsbereiches verteilt wird, so dass nicht allein der die Eingriffskontur unmittelbar umgebende Wandbereich ausgebrochen wird, sondern der komplette durch die Sollbruchstelle umgrenzte Wandungsbereich. Bei solchen, üblicherweise aus Kunststoff hergestellten Installationsteilen, kann die Versteifung in unterschiedlichster Form vorgesehen sein, beispielsweise in Form von Rippen, Materialverdickungen, Einprägungen, Vertiefungen oder dergleichen. Die Versteifung ist in jedem Falle so auszubilden und anzuordnen, dass beispielsweise mittels der Klinge des Schraubendrehers auf einen großen Flächenbereich des Wandungsbereiches eingewirkt werden kann, so dass dieser komplett entlang der Sollbruchstelle ausgebrochen werden kann.

Erfindungsgemäß ist die Eingriffskontur nicht lediglich ein beispielsweise von einem Versteifungskragen umgebener Wandungsteil, sondern die Eingriffskontur ist auf ihrer der Eingriffsöffnung abgewandten Seite durch eine napfartige Tasche versteift. Die Tiefe der Tasche ist der Eindringtiefe des Werkzeuges, beispielsweise der Klinge des Schraubendrehers angepasst. Die Wandung der Tasche, die auch durch einen Boden geschlossen ist, bildet eine Steife, was zu einer wirkungsvollen Kraftübertragung von der Klinge des Schraubendrehers auf den Flächenbereich führt, der zusätzlich auch noch weitere Versteifungen aufweisen kann Bevorzugt ist hierbei in an sich bekannter Weise vorgesehen, dass die Eingriffskontur von einem Versteifungskragen umgeben ist.

Besonders bevorzugt ist hierbei vorgesehen, dass die Versteifung durch mindestens einen an die Eingriffskontur oder an einem Versteifungskragen der Eingriffskontur oder an eine die Eingriffskontur ergänzende napfartige Tasche anschließenden Materialsteg gebildet ist, der sich über mindestens einen Teil des Wandungsbereiches erstreckt.

Die gewünschte Versteifung des gesamten Wandungsbereiches wird hierbei durch mindestens einen zusätzlichen Materialsteg erreicht, der an die Eingriffskontur anschließt und sich über mindestens einen Teil des ausbrechbaren Wandungsbereiches erstreckt. Alternativ kann auch dieser Materialsteg an den Versteifungskragen angeformt sein, der die Eingriffkontur umgibt. Selbstverständlich ist dieser Steg auch an den ausbrechbarem Wandungsbereich angeformt, damit eine entsprechende Kraftübertragung erfolgen kann. Auch ist es möglich, den Materialsteg unmittelbar an die napfartige Tasche anzuformen und ebenso an den Wandungsbereich, um eine gute Krafteinleitung und Kraftverteilung zu erreichen, die es gestattet, den Wandungsbereich vollständig mittels Bewegung der Klinge eines Schraubendrehers zu entfernen.

Unter Umständen ist bevorzugt vorgesehen, dass die Eingriffskonturen außermittig an dem kreisrunden Wandungsbereich ausgebildet sind und der Materialsteg radial über das Zentrum des Wandungsbereiches zum gegenüberliegenden Rand des Wandungsbereiches gerichtet verläuft.

Eine solche Ausbildung führt zu einer vorzüglichen Krafteinleitung des Wirkangriffes der Schraubendreherklinge, um den Wandungsbereich möglichst vollständig ausbrechen zu können.

Der Materialsteg kann im Prinzip bis zur Sollbruchtrennstelle führen. Im Regelfall reicht es aber aus, wenn der Materialsteg über die Mitte des Wandungsbereiches bis in einen weiteren Bereich geführt ist, um das vollständige Austrennen des Wandungsbereiches mittels der Klinge eines Schraubendrehers zu bewirken.

Eine unter Umständen bevorzugte Alternative hierzu wird darin gesehen, dass die Eingriffskontur mittig an dem kreisrunden Wandungsbereich ausgebildet ist und mehrere Materialstege kreuzweise in Richtung zum Rand des Wandungsbereiches gerichtet verlaufen.

Bei einer solchen Ausgestaltung ist die Eingriffskontur mittig angeordnet. Durch die kreuzweise Anordnung von mehreren Materialstegen wird eine gleichmäßige Kraftverteilung über die gesamte Fläche des Wandungsbereiches erreicht, so dass dieser durch Manipulation mit einem Schraubendreher vollständig ausgebrochen werden kann. Vorzugsweise verlaufen die kreuzweise gerichteten Materialstege paarweise einerseits parallel zu der schlitzförmigen Eingriffskontur für das Werkzeug und paarweise einander entgegengerichtet mittig quer zu dieser.

Eine bevorzugte Weiterbildung wird ferner darin gesehen, dass zwei jeweils durch Sollbruchstellen umgrenzte Wandungsbereiche mit jeweils einer Eingriffskontur für ein Werkzeug in der Wandung ausgebildet sind, die einander überdecken, wobei ein erster ausbrechbarer kreisrunder Wandungsbereich einen solchen Durchmesser aufweist, dass in den vom herausgebrochenen ersten Wandungsbereich freigegebenen Ausschnitt ein Schlauch oder Rohr mit einem ersten Durchmesser einsteckbar ist, wobei der erste ausbrechbare Wandungsbereich von der Kontur des zweiten kreisrunden Wandungsbereiches umgeben ist, dessen Durchmesser so bemessen ist, dass in den vom zweiten herausgebrochenen Wandungsteil freigegebenen Ausschnitt ein Schlauch oder Rohr mit einem zweiten, gegenüber dem ersten Durchmesser größeren Durchmesser einsteckbar ist.

Hierbei sind zwei einander überdeckende Wandungsbereiche vorgesehen, die dazu bestimmt sind, einerseits ein Rohr mit einem ersten geringeren Durchmesser und andererseits ein Rohr mit einem zweiten größeren Durchmesser durchstecken oder einstecken zu können. Solche Ausbildungen sind an sich aus der DE 10 2006 037 700 B3 bekannt. Die Besonderheit besteht darin, solche konstruktiven Lösungen in gleicher Weise weiterzubilden, wie dies insbesondere im Hauptanspruch angegeben ist.

Auch kann hierbei vorgesehen sein, dass die Sollbruchstellen zum Ausbrechen des ersten und zweiten Wandungsbereiches exzentrisch zueinander ausgerichtet sind, so dass sie an einem Umfangsbereich ineinander übergehen und im diesem gegenüber liegenden Umfangsbereich den größten Abstand voneinander aufweisen.

Bei diesen Ausbildungen ist insbesondere bevorzugt vorgesehen, dass die Eingriffskontur am ersten Wandungsbereich mittig derselben ausgebildet ist.

Alternativ kann auch vorgesehen sein, dass die Eingriffskontur am ersten Wandungsbereich außermittig desselben ausgebildet ist, insbesondere nahe des Umfangsbereiches der mit dem Umfangsbereich des zweiten Wandungsbereiches den größten Abstand bildet.

Auch ist bevorzugt vorgesehen, dass der Wandungsbereich eine Versteifung aufweist, mittels derer die Wirkkraft des Werkzeuges in der Eingriffslage auf einen großen Flächenbereich des Wandungsbereiches erstreckt ist.

Besonders bevorzugt ist dabei vorgesehen, dass die Eingriffskontur am zweiten Wandungsbereich durch eine Versteifung in Form einer sichelartigen Rippe versteift ist, die sich nahe der Sollbruchstelle oder unmittelbar neben der Sollbruchstelle zwischen erstem und zweiten Wandungsbereich in Umfangsrichtung erstreckt, vorzugsweise über etwa die Hälfte des Umfangs.

Durch diese Ausbildung wird erreicht, dass bei Einsatz einer Schraubendreherklinge in die Eingriffskontur am zweiten Wandungsbereich dieser vollständig ausgebrochen werden kann, weil die Krafteinleitung über die sichelartige Rippe erfolgt, so dass hierdurch der gesamte Wandungsbereich in einfacher Weise vollständig ausgebrochen werden kann.

Eine bevorzugte Ausführungsform wird darin gesehen, dass das Installationsteil eine Einbaudose für elektrische Installationen ist, deren Mantel die Wandung bildet, die die von Sollbruchstellen umgrenzten Wandungsbereiche aufweist.

Solche Einbaudosen können nach Art einer bekannten Einbaudose gemäß DE 10 2006 037 700 B3 ausgebildet sein. Es sind aber auch Einbaudosen in dieser Weise auszustatten, die für die Betonbauinstallation geeignet und bestimmt sind.

Bei anderen Ausführungsformen ist bevorzugt vorgesehen, dass der kreisrunde Wandungsbereich mittig einen Dom aufweist.

Ein solcher Dom kann zu unterschiedlichen Zwecken vorgesehen sein, beispielsweise bei einer für den Betonbau bestimmten Bauform dazu dienen, dass durch den Dom ein Nagel zur Befestigung des Elementes an einer Schalung oder dergleichen angebracht werden kann.

Bei einer solchen Ausbildung ist bevorzugt vorgesehen, dass mindestens eine Eingriffskontur mittig des Wandungsbereiches ausgebildet ist und den Dom kreuzt, wobei die den Dom seitlich überragenden Bereiche der Eingriffskontur durch taschenartige an den Dom und den Wandungsbereich angeschlossene Wandungen angeschlossen ist.

Hierbei wird durch den Dom und die den Dom seitlich überragenden Bereiche der Eingriffskontur, an die taschenartige Wandungen anschließen, die sowohl mit dem Wandungsbereich als auch mit dem Dom verbunden sind, erreicht, dass bei Einsatz eines entsprechenden Werkzeuges in die Eingriffskontur sowohl der Dom als auch die taschenartigen Wandungen Versteifungen bilden, die eine Krafteinleitung in die gesamte Fläche des ausbrechbaren Wandungsbereiches bewirken, so dass durch entsprechende Manipulation der komplette Wandungsbereich samt Dom ausgebrochen werden kann.

Um hierbei die Krafteinleitung noch zu verbessern kann vorgesehen sein, dass die an den Dom seitlich angeschlossenen Wandungen zusätzlich quer abragende Versteifungsrippen aufweisen, die auch an den Wandungsbereich angeschlossen sind.

Um einerseits die Krafteinleitung noch zu verbessern und andererseits eine Eingriffskontur zu schaffen, die in unterschiedlicher Weise zugänglich ist, wird vorgeschlagen, dass um den Dom verteilt mehrere Eingriffskonturen in dem Wandungsbereich vorgesehen sind.

Hierbei sind vorzugsweise die Eingriffskonturen zusätzlich mit gleichgerichtet zum Dom abragenden taschenartigen Wandungen ausgestattet. Die Zugänglichkeit zum Ausbrechen für den Benutzer ist dadurch gegeben, dass er eine dieser Eingriffskonturen nutzt. Durch Eingriff in die entsprechende Eingriffskontur wird eine Krafteinleitung auch in Richtung auf den Dom und die damit verbundenen Wandungsteile erreicht, so dass ein sauberes Ausbrechen des Wandungsbereiches erreicht wird.

Um die Krafteinleitung noch zu verbessern kann vorgesehen sein, dass die Eingriffskonturen über von dem Wandungsbereich abragende Stege mit dem Dom verbunden sind.

Alternativ oder zusätzlich kann auch vorgesehen sein, dass vom Dom jeweils zwischen benachbarten Eingriffskonturen Stege abragen, die mit dem Wandungsbereich verbunden sind.

Eine bevorzugte Ausführungsform wird darin gesehen, dass das Installationsteil eine im Querschnitt runde, hülsenartige Tülle ist, die zum Anschluss oder zur Durchführung von Rohren oder Schläuchen dient, wobei der ausbrechbare Wandungsbereich den Boden der Tülle bildet.

Dabei ist bevorzugt vorgesehen, dass die Eingriffskonturen außenseitig des Bodens offen sind und innenseitig die Versteifungsteile und der Dom abragen.

Bei allen Ausführungsformen ist vorzugsweise vorgesehen, dass das Installationsteil einstückig aus Kunststoff geformt ist.

Als Material wird hierbei vorzugsweise Kunststoff eingesetzt, der ausreichend formbeständig ist, also relativ hart ist, damit das Installationsteil seine Funktion erfüllen kann.

Bevorzugt ist hierbei vorgesehen, dass die Sollbruchstelle durch eine durchgehende materialverdünnte Zone gebildet ist.

Insbesondere dann, wenn solche Installationsteile für die Betonbauinstallation verwendet werden, ist es wesentlich, dass die Sollbruchstellen keine Leckstellen bilden, durch die Betonschlämmpe oder dergleichen eindringen kann. Demzufolge ist die Sollbruchstelle durch eine durchgehende materialverdünnte Zone gebildet, die undurchlässig für Flüssigkeit oder dergleichen ist. Gerade bei solchen Sollbruchstellen, die nicht durch Perforation sondern durch eine durchgehende verdünnte Wandung oder dergleichen erzeugt sind, ist die Schwierigkeit des vollständigen Austrennens gegeben, da bei den im Stand der Technik bekannten Möglichkeiten zum Ausbrechen mittels einer Klinge eines Schraubendrehers ein vollständiges Entfernen des entsprechenden Wandungsbereiches nicht oder nicht ohne zusätzliche Manipulation möglich ist.

Unter Umständen ist bevorzugt vorgesehen, dass mindestens die Sollbruchstelle, vorzugsweise auch die neben der Sollbruchstelle befindliche Wandungszone und/oder die neben der Sollbruchstelle befindliche Zone des Wandungsbereiches mit einem weichelastischen Kunststoff überdeckt ist, der auf den harten Kunststoff angeformt ist.

Dadurch, dass ein entsprechend weichelastischer Kunststoff aufgeformt wird, wird erreicht, dass dann, wenn der Wandungsbereich ausgetrennt ist, an der erzeugten Randkante (Sollbruchstelle) ein Film aus weichelastischem Kunststoff zur Verfügung steht, der beim Einstecken oder Durchstecken von Rohren oder dergleichen dichtende Funktion hat. Auch kann hierdurch eine gewisse Zugentlastung von durchgeführten Teilen erreicht werden.

Zusätzlich oder alternativ kann vorgesehen sein, dass die Sollbruchstelle durch einen weichelastischen Kunststoff gebildet ist, der an die Kanten der Wandung und des Wandungsbereiches aus hartem Kunststoff angeformt ist.

Auch diese Ausbildung führt zu den oben geschilderten Vorteilen hinsichtlich der Abdichtung und gegebenenfalls Zugentlastung.

Eine Variante, die höhere Stabilität bewirkt, aber dennoch auch eine Abdichtung von durchgeführten Elementen ermöglicht, wird darin gesehen, dass die Randkanten der Wandung und des Wandungsbereiches einstückig durch Stege aus hartem Kunststoff verbunden sind, die in den weichelastischen Kunststoff, der die Sollbruchstelle bildet, eingebettet und/oder von diesem überdeckt sind.

Hierbei kann die Wandung mit dem Wandungsbereich, der ausbrechbar ist, einen Spaltabstand umlaufend bilden, wobei in diesen Spalt nach Art von Speichen entsprechende Stege aus hartem Kunststoff, also aus dem gleichen Material, wie die Wandung und der Wandungsbereich vorgesehen sind. Auf diese Zone ist entsprechender weichelastischer Kunststoff aufgeformt. Beim Auftrennen der Sollbruchstelle wird dann nicht nur der weichelastische Kunststoff aufgetrennt, sondern auch die Stege aus hartem Kunststoff werden durchtrennt. Dennoch wird eine ausreichende Abdichtung von einem durchgesteckten Rohr oder dergleichen erreicht.

Die Anwendungsvielfalt kann auch dadurch verbessert werden, dass die Wandung aus gegenüber dem Wandungsbereich unterschiedlichem Kunststoffmaterial besteht.

Je nach Anwendungsfall können unterschiedliche Materialien für die Wandung und den Wandungsbereich eingesetzt werden, wodurch das Material entsprechenden Belastungen angepasst werden kann. Unter Umständen kann durch die entsprechende andere Werkstoffauswahl der austrennbare Wandungsbereich versteift sein, so dass das einfache Austrennen mittels der Klinge eines Schraubendrehers erleichtert ist.

Des Weiteren kann vorgesehen sein, dass die Wandung im Bereich der Sollbruchstelle einen Kragen aufweist, der bei entferntem Wandungsbereich einen Rastbereich bildet, an dem der Mantel eines mit Außenrippen versehenen, eingesteckten oder durchgesteckten Rohres des Schlauches verrastbar ist.

Sofern das entsprechende Installationsteil beispielsweise mit einem Rohr oder dergleichen kombiniert wird, dessen Mantel Außenrippen aufweist, so kann durch die entsprechende konstruktive Lösung eine Zugentlastung des durchgesteckten oder eingesteckten Rohres erreicht werden, weil der Kragen am Rand der Sollbruchstelle mit den Außenrippen des Mantels des Rohres oder dergleichen verrastet.

Um auch diesbezüglich eine gute Abdichtung sicherzustellen, kann vorgesehen sein, dass der Kragen an seinem freien Ende eine Schicht aus weichem Kunststoff aufweist.

Ausführungsbeispiele der Erfindung sind in der Zeichnung dargestellt und im Folgenden näher beschrieben.

Es zeigt:
- Figur 1: ein erstes Installationsteil in Ansicht;
- Figur 2: eine Variante in gleicher Ansicht;
- Figur 3 und 4: ein alternatives Installationsteil von vorn und von hinten gesehen;
- Figur 5 und 6: eine Variante dazu in gleicher Ansicht;
- Figur 7 und 8: eine weitere Variante in gleicher Ansicht;
- Figur 9 und 10: eine weitere Variante in gleicher Ansicht;
- Figur 11: die Ausführungsform nach Figur 9 und 10 mit ausgebrochenem Wandungsteil und durchgeführtem Rohr;
- Figur 12: desgleichen im Schnitt A-A der Figur 11 gesehen;
- Figur 13 und 14: zwei Varianten in Seitenansicht gesehen;
- Figur 15 und 16: die Varianten im Schnitt B-B beziehungsweise C-C der Figuren 13 beziehungsweise 14 gesehen;
- Figur 17: die Einzelheit Y der Figur 15 in vergrößertem Maßstab;
- Figur 18: die Einzelheit Y der Figur 16 in vergrößertem Maßstab;
- Figur 19: die Einzelheit X der Figur 12 in vergrößertem Maßstab.

In der Zeichnung sind Installationsteile 1,2 in unterschiedlichen Varianten gezeigt, die für elektrische Installationen dienen. Vorzugsweise sind die in der Zeichnung dargestellten Ausführungsbeispiele für die Betonbauinstallation einsetzbar.

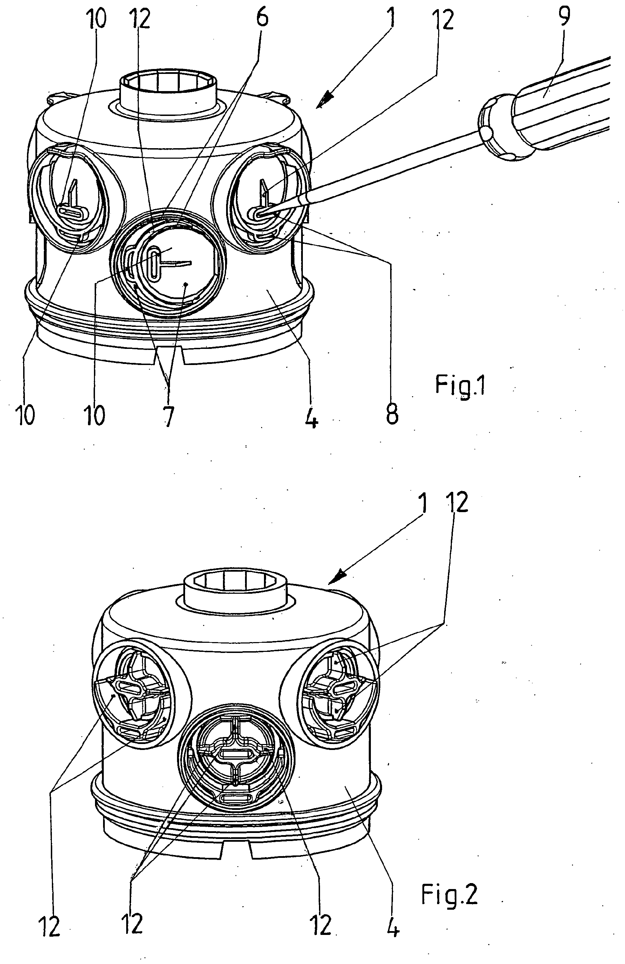

Die Installationsteile 1,2 sind derart ausgestaltet, dass sie ein Einführen oder Durchführen mindestens eines Leerohres 3 ermöglichen. Hierzu weist jedes Installationsteil 1,2 mindestens eine Wandung 4 beziehungsweise 5 mit mindestens einem durch eine Sollbruchstelle 6 umgrenzten Wandungsbereich 7 auf, der durch Heraustrennen dieses Wandungsbereiches 7 einen Einlass oder Durchlass für ein entsprechendes Leerrohr 3 oder dergleichen langförmiges Element bildet. Der Wandungsbereich 7 weist eine Eingriffskontur 8 für ein Werkzeug, insbesondere die Klinge eines Schraubendrehers 9 zum Ausbrechen des Wandungsteils 7 auf, wie in Figur 1 veranschaulicht ist.

Um ein vollständiges Herausbrechen des Wandungsbereiches 7 mittels der Klinge des Schraubendrehers 9 zu erreichen, weist der Wandungsbereich 7 eine Versteifung auf, mittels derer die Wirkkraft des Werkzeuges 9 in der Eingriffslage auf einen großen Flächenbereich des Wandungsteiles 7 erstreckt ist, so dass bei Betätigung des Werkzeuges nicht nur die Eingriffskontur 8 oder die unmittelbar benachbarten Bereiche, sondern der gesamte Flächenbereich des Wandungsbereiches 7 herausgetrennt werden kann.

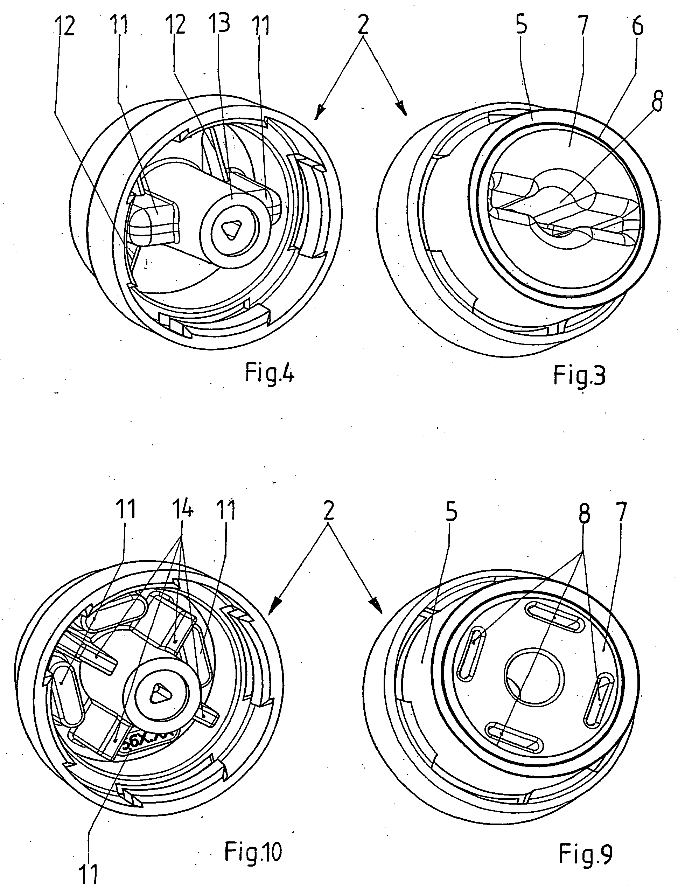

Vorzugsweise ist die Eingriffskontur 8 von einem Versteifungskragen 10 umgeben, der im Ausführungsbeispiel nach Figur 1 und 2 außenseitig des Installationsteiles 1 von dem Wandungsbereich 7 abragt. Bei den übrigen Ausführungsformen ist eine analoge Ausbildung durch einen innen liegenden Versteifungskragen erreicht, der andeutungsweise in Figur 4 ersichtlich ist.

Zusätzlich kann die Eingriffskontur 8 durch eine napfartige Tasche 11 versteift sein, die bei der Ausführungsform nach Figur 3 folgende nach hinten von dem Wandungsbereich 7 abragt. Die Tiefe dieser durch einen Boden geschlossenen Tasche 11 ist der Solleindringtiefe des Werkzeuges 9 angepasst. Auch diese Tasche 11 bewirkt eine Versteifung des Flächenbereiches 7 und eine gute Kraftverteilung der Krafteinwirkung des Werkzeuges 9 auf diesen Flächenbereich 7.

Die Versteifung wird ferner durch mindestens einen an die Eingriffskontur 8 anschließenden Materialsteg 12 erreicht, der sich über mindestens einen Teil des Wandungsbereiches 7 erstreckt. Der Materialsteg 12 schließt vorzugsweise nicht nur an die Eingriffskontur 8 an, sondern an den die Eingriffskontur 8 umgebenden Kragen 10 und/oder auch an die napfartige Tasche 11. Der Materialsteg 12 ist jeweils einstückig mit dem ausbrechbaren Wandungsbereich ausgebildet und an diesen angeformt, um die Krafteinleitung in diesem Wandungsbereich zu erreichen.

Wie aus den Ausführungsbeispielen ersichtlich, kann die Eingriffskontur 8 beispielsweise außermittig an dem kreisrunden Wandungsbereich 7 ausgebildet sein, wie zum Beispiel aus Figur 1 ersichtlich ist, und der Materialsteg 12 kann dann radial über das Zentrum des Wandungsbereiches 7 in Richtung auf den gegenüberliegenden Rand des Wandungsbereiches 7 verlaufen.

Alternativ kann die Eingriffskontur 8 auch mittig an dem kreisrunden Wandungsbereich 7 ausgebildet sein, wie beispielsweise aus Figur 2 ersichtlich, wobei dann beispielsweise mehrere Materialstege 12 kreuzweise in Richtung zum Rand des Wandungsbereiches 7 hin gerichtet verlaufen. Beim Ausführungsbeispiel nach Figur 1 und 2 sind zwei jeweils durch Sollbruchstellen 6 umgrenzte Wandungsbereiche 7 mit jeweils einer Eingriffskontur 8 für ein Werkzeug 9 in der Wandung 7 ausgebildet, die einander überdecken, wobei ein erster ausbrechbarer kreisrunder Wandungsbereich 7 (radial innen liegend) einen solchen Durchmesser aufweist, dass in den vom herausgebrochenen ersten Wandungsbereich 7 freigegebene Ausschnitt ein Schlauch oder Rohr mit einem ersten Durchmesser einsteckbar ist. Der erste ausbrechbare Wandungsbereich 7 ist von der Kontur des zweiten kreisrunden Wandungsbereiches 7 umgeben, dessen Durchmesser so bemessen ist, dass in den vom zweiten herausgebrochenen Wandungsteil 7 insgesamt freigegebenen Ausschnitt ein Schlauch oder Rohr mit einem zweiten, gegenüber dem ersten Durchmesser größeren Durchmesser einsteckbar ist.

Im Ausführungsbeispiel sind die Sollbruchstellen 6 zum Ausbrechen des ersten und zweiten Wandungsbereiches 7 exzentrisch zueinander ausgerichtet, so dass sie an einen Umfangsbereich ineinander übergehen und im diesem Bereich gegenüberliegenden Umfangsbereich den größten Abstand voneinander aufweisen.

Beim Ausführungsbeispiel nach Figur 2 ist die Eingriffskontur 8 am ersten Wandungsbereich 7 (der innen liegende Bereich) mittig desselben ausgebildet. Bei der Ausführungsform nach Figur 1 ist die Eingriffskontur 8 am ersten (inneren) Wandungsbereich 7 außermittig desselben ausgebildet, insbesondere nahe des Umfangsbereiches, der mit dem Umfangsbereich des zweiten Wandungsbereiches 7 den größten Abstand bildet.

Die Eingriffskontur 8 am zweiten Wandungsbereich 7 (der außen liegende) ist in dem Bereich ausgebildet, der mit dem ersten Wandungsbereich 7 den größten Abstand bildet. Hierbei ist die Eingriffskontur durch eine Versteifung in Form einer sichelartigen Rippe (12) versteift, die sich nahe der Sollbruchstelle 6 zwischen dem ersten und zweiten Wandungsbereich in Umfangsrichtung erstreckt, vorzugsweise über etwa die Hälfte des Umfangs.

Im Falle der Figur 1 und 2 ist das Installationsteil 1 eine Einbaudose für Elektroinstallationen, wobei deren Mantel die Wandung 4 bildet, die die von den Sollbruchstellen 6 umgrenzten Wandungsbereiche 7 aufweist.

Bei den Ausführungsformen nach Figur 3 bis 19 weist jeweils der kreisrunde Wandungsbereich 7 mittig einen Dom 13 auf.

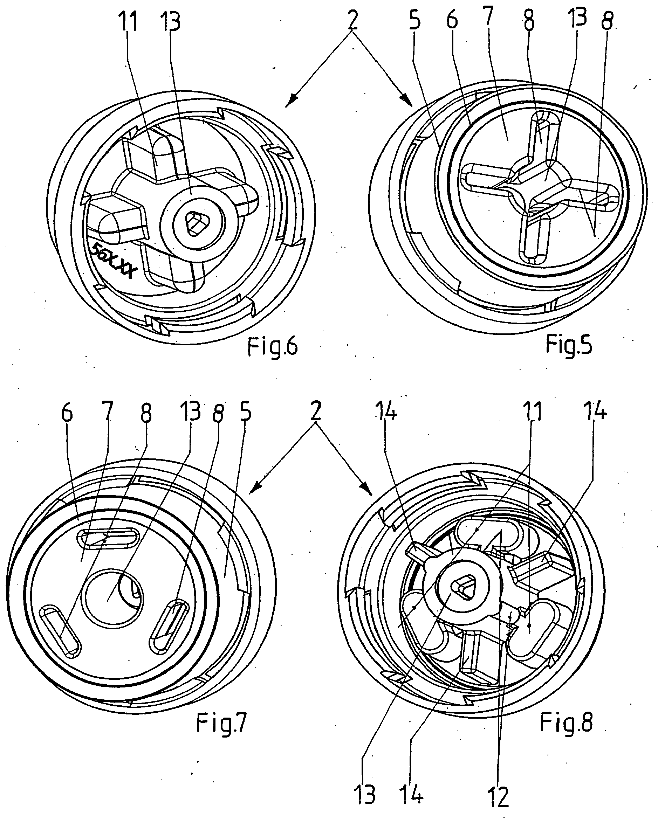

Bei der Ausführungsform nach Figur 3 und 4 beziehungsweise nach Figur 5 und 6 ist eine Eingriffskontur 8 beziehungsweise sind zwei Eingriffskonturen 8 mittig des Wandungsbereiches 7 ausgebildet, die den Dom 13 an seiner Mündung kreuzen, wobei die den Dom 13 seitlich überragenden Bereiche der Eingriffskontur 8 durch taschenartige, an den Dom 13 und dem Wandungsbereich 7 angeschlossene Wandungen 11 angeschlossen sind.

Insbesondere bei der Figur 3 und 4 weisen die an den Dom 13 seitlich angeschlossenen Wandungen 11 zusätzlich quer abragende Versteifungsrippen 12 auf, die auch am Wandungsbereich 7 angeschlossen, das heißt mit diesem einstückig verbunden sind.

Bei den Ausführungsformen nach Figur 7 und 8 sowie 9 und 10 sind um den Dom 13 verteilt mehrere Eingriffskonturen 8 in dem Wandungsbereich 7 ausgebildet. Diese weisen rückseitig wiederum taschenartige Wandungen 11 auf, die über Stege 12 mit dem Dom 13 und mit dem Flächenbereich 7 verbunden sind.

Zusätzlich ragen bei der Ausführungsform nach Figur 8 beziehungsweise Figur 10 zwischen den benachbarten Eingriffskonturen 8 beziehungsweise den diese umgebenden Taschen 11 Stege 14 vom Dom 13 ab, die einstückig mit dem Wandungsbereich 7 ausgebildet sind.

Bei diesen Ausführungsformen bildet das Installationsteil 2 eine im Querschnitt runde, hülsenartige Tülle, die zum Anschluss oder zur Durchführung von Rohren 3, Schläuchen oder dergleichen dient. Der ausbrechbare Wandungsbereich 7 bildet dabei den Boden der entsprechenden Tülle.

Die Anordnung ist so vorgenommen, dass die Eingriffskonturen 8 außenseitig des durch das ausbrechbare Teil 7 gebildeten Bodens offen sind und innenseitig die Versteifungsteile und der Dom 13 abragen.

Bei allen Ausführungsformen ist das Installationsteil 1,2 einstückig aus geeignetem formstabilem Kunststoff geformt. Die Sollbruchstelle 6 ist jeweils durch eine durchgehende materialverdünnte Zone gebildet, die einerseits eine Dichtigkeit gewährleistet und andererseits eine Auftrennung durch entsprechende Manipulation ermöglicht.

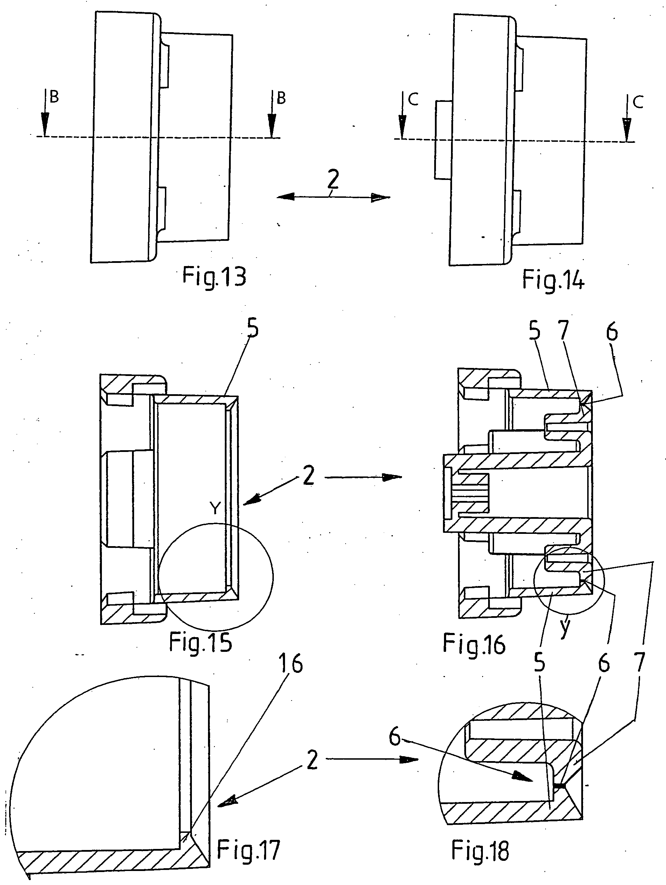

Eine Besonderheit ist noch in Figur 16 und 18 ersichtlich. Hierbei sind die Randkanten der Wandung 5 und des Wandungsbereiches 7 durch elastomeren Kunststoff 15 miteinander verbunden, wobei hierdurch die Solltrennstelle gebildet ist. Hierdurch wird erreicht, dass eine Abdichtung gegenüber dem Mantel des durchgeführten oder eingesteckten Rohres 3 erreicht wird.

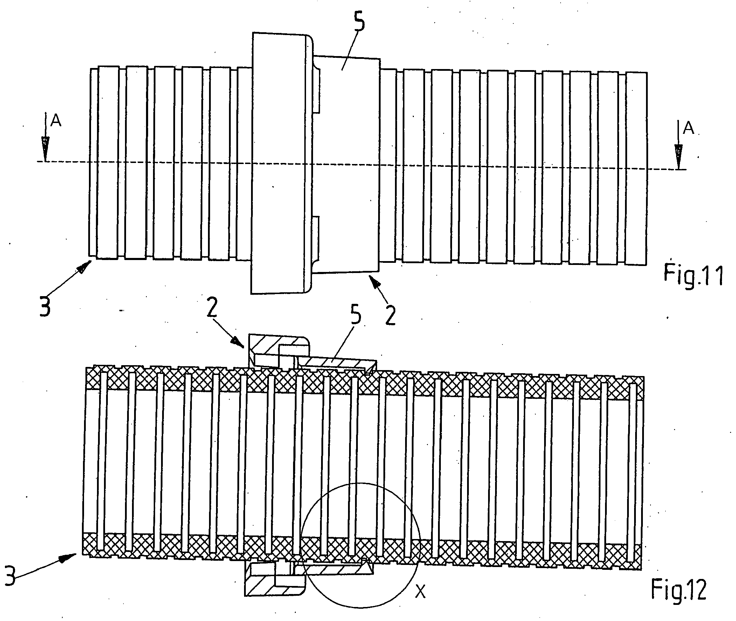

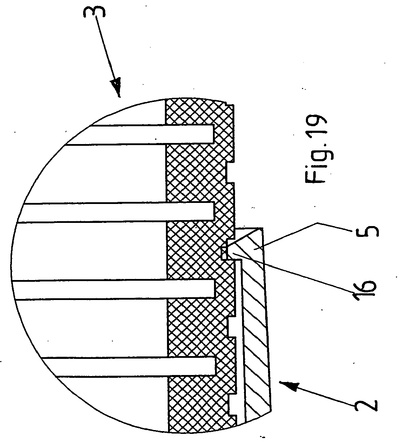

Zusätzlich weist die Wandung 5 im Bereich der Sollbruchstelle 6, wie insbesondere in Figur 19 und Figur 12 dargestellt, einen Kragen 16 auf, der bei entferntem Wandungsbereich 7 einen Rastbereich bildet, an dem der Mantel eines mit Außenrippen versehenen eingesteckten oder durchgesteckten Rohres 3 oder Schlauches verrastbar ist, wie insbesondere in Figur 12 und 19 gezeigt ist. Vorzugsweise weist analog der Darstellung nach Figur 18 der Kragen 16 an seinem freien Ende eine Schicht aus weichem Kunststoff 15 auf, um eine Rastung und eine Abdichtung sicherzustellen.

Das Installationsteil gemäß Figur 3 bis Figur 19 wird in der Betonbauinstallation benutzt, indem das Teil mit der Fläche 7 und der Eingriffskontur 8 voraus an eine Schalung angefügt und angenagelt wird. Der Nagel wird von hinten in die mittige Lochung des Domes 13 eingetrieben, so dass das Teil an der Schalung fixiert ist. Von hinten kann dann ein Profilrohr oder dergleichen eingesteckt werden, welches zu anderen Bauteilen führt. Anschließend kann die gesamte Montageinheit mit Beton vergossen werden. Nach dem Abbinden des Betons wird die Schalung gelöst und die Frontseite des Installationsteils 2 liegt frei, so dass die Eingriffskontur 8 zugänglich ist. Der Benutzer kann dann durch entsprechende Manipulation mit einem Werkzeug 9 den Wandungsbereich 7 entfernen und einen Anschlussschlauch 3 oder dergleichen gedichtet einführen und rasten. Die Funktion des Installationsteiles 1 entspricht im Prinzip der Funktion der Einbaudose, die in der DE 10 2006 037 700 B3 beschrieben ist.
Die Erfindung ist nicht auf die Ausführungsbeispiele beschränkt, sondern im Rahmen der Patentansprüche vielfach variabel.

## Patentansprüche

1. Installationsteil (1,2), insbesondere für elektrische Installationen, zum Einführen oder Durchführen mindestens eines Leerrohres (3), wobei das Installationsteil (1,2) mindestens eine Wandung (4,5) mit mindestens einem durch eine Sollbruchstelle (6) umgrenzten Wandungsbereich (7) aufweist, der durch Heraustrennen des Wandungsbereiches (7) einen Einlass oder Durchlass für ein Leerrohr (3) bildet, wobei der Wandungsbereich (7) mindestens eine Eingriffskontur (8) für ein Werkzeug (9), insbesondere die Klinge eines Schraubendrehers, zum Ausbrechen des Wandungsbereiches (7)aufweist, wobei der Wandungsbereich (7) eine Versteifung aufweist, mittels derer die Wirkkraft des Werkzeuges (9) in der Eingriffslage auf einen großen Flächenbereich des Wandungsbereiches (7) erstreckt ist, **dadurch gekennzeichnet, dass** die Eingriffskontur (8) durch eine napfartige Tasche (11) versteift ist, deren Tiefe der Solleindringtiefe des Werkzeugs (9) entspricht und die Wandung der Tasche, die auch durch einen Boden geschlossen ist, eine Steife bildet, was zu einer wirkungsvollen Kraftübertragung von dem Werkzeug auf den Flächenbereich führt.

2. Installationsteil nach Anspruch 1, **dadurch gekennzeichnet, dass** die Eingriffskontur (8) von einem Versteifungskragen (10) umgeben ist.

3. Installationsteil nach einem der Ansprüche 1 oder 2, **dadurch gekennzeichnet, dass** die Versteifung durch mindestens einen an die Eingriffskontur (8) oder an einem Versteifungskragen (10) der Eingriffskontur (8) oder an eine die Eingriffskontur (8) ergänzende napfartige Tasche (11) anschließenden Materialsteg (12) gebildet ist, der sich über mindestens einen Teil des Wandungsbereiches (7) erstreckt.

4. Installationsteil nach Anspruch 3, **dadurch gekennzeichnet, dass** die Eingriffskonturen (8) außermittig an einem kreisrunden Wandungsbereich (7) ausgebildet ist und der Materialsteg (12) radial über das Zentrum des Wandungsbereiches (7) zum gegenüberliegenden Rand des Wandungsbereiches (7) gerichtet verläuft.

5. Installationsteil nach Anspruch 3, **dadurch gekennzeichnet, dass** die Eingriffskontur (8) mittig an einem kreisrunden Wandungsbereich (7) ausgebildet ist und mehrere Materialstege (12) kreuzweise in Richtung zum Rand des Wandungsbereiches (7) gerichtet verlaufen.

6. Installationsteil nach einem der Ansprüche 1 bis 5, **dadurch gekennzeichnet, dass** zwei jeweils durch Sollbruchstellen (6) umgrenzte Wandungsbereiche (7) mit jeweils einer Eingriffskontur (8) für ein Werkzeug (9) in der Wandung (4) ausgebildet sind, die einander überdecken wobei ein erster ausbrechbarer kreisrunder Wandungsbereich (7) einen solchen Durchmesser aufweist, dass in den vom herausgebrochenen ersten Wandungsbereich (7) freigegebenen Ausschnitt ein Schlauch (3) oder Rohr mit einem ersten Durchmesser einsteckbar ist, wobei der erste ausbrechbare Wandungsbereich (7) von der Kontur des zweiten kreisrunden Wandungsbereiches (7) umgeben ist, dessen Durchmesser so bemessen ist, dass in den vom zweiten herausgebrochenen Wandungsteil (7) freigegebenen Ausschnitt ein Schlauch (3) oder Rohr mit einem zweiten, gegenüber dem ersten Durchmesser größeren Durchmesser einsteckbar ist.

7. Installationsteil nach Anspruch 6, **dadurch gekennzeichnet, dass** die Sollbruchstellen (6) zum Ausbrechen des ersten und zweiten Wandungsbereiches (7) exzentrisch zueinander ausgerichtet sind, so dass sie an einem Umfangsbereich ineinander übergehen und im diesem gegenüber liegenden Umfangsbereich den größten Abstand voneinander aufweisen.

8. Installationsteil nach einem der Ansprüche 6 oder 7, **dadurch gekennzeichnet, dass** die Eingriffskontur (8) am ersten Wandungsbereich (7) mittig desselben ausgebildet ist.

9. Installationsteil nach einem der Ansprüche 6 oder 7, **dadurch gekennzeichnet, dass** die Eingriffskontur (8) am ersten Wandungsbereich (7) außermittig desselben ausgebildet ist, insbesondere nahe des Umfangsbereiches der mit dem Umfangsbereich des zweiten Wandungsbereiches (7) den größten Abstand bildet.

10. Installationsteil nach einem der Ansprüche 6 bis 9, **dadurch gekennzeichnet, dass** die Eingriffskontur (8) am zweiten Wandungsbereich (7) in dem Bereich ausgebildet ist, der mit dem ersten Wandungsbereich (7) den größten Abstand bildet.

11. Installationsteil nach einem der Ansprüche 6 bis 10, **dadurch gekennzeichnet, dass** die Eingriffskontur (8) am zweiten Wandungsbereich (7) durch eine Versteifung in Form einer sichelartigen Rippe versteift ist, die sich nahe der Sollbruchstelle (6) oder unmittelbar neben der Sollbruchstelle (6) zwischen erstem und zweiten Wandungsbereich (7) in Umfangsrichtung erstreckt, vorzugsweise über etwa die Hälfte des Umfangs.

12. Installationsteil nach einem der Ansprüche 1 bis 11, **dadurch gekennzeichnet, dass** das Installationsteil(1) eine Einbaudose für elektrische Installationen ist, deren Mantel die Wandung (4) bildet, die die von Sollbruchstellen (6) umgrenzten Wandungsbereiche (7) aufweist.

13. Installationsteil nach einem der Ansprüche 1 bis 5, **dadurch gekennzeichnet, dass** der Wandungsbereich (7) mittig einen Dom (13) aufweist und kreisrund ausgebildet ist.

14. Installationsteil nach Anspruch 13, **dadurch gekennzeichnet, dass** mindestens eine Eingriffskontur (8) mittig des Wandungsbereiches (7) ausgebildet ist und den Dom (13) kreuzt, wobei die den Dom (13) seitlich überragenden Bereiche der Eingriffskontur (8) durch taschenartige an den Dom (13) und den Wandungsbereich (7) angeschlossene Wandungen (11) angeschlossen ist.

15. Installationsteil nach Anspruch 14, **dadurch gekennzeichnet, dass** die an den Dom (13) seitlich angeschlossenen Wandungen (11) zusätzlich quer abragende Versteifungsrippen (12) aufweisen, die auch an dem Wandungsbereich (7) angeschlossen sind.

16. Installationsteil nach Anspruch 13, **dadurch gekennzeichnet, dass** um den Dom (13) verteilt mehrere Eingriffskonturen (8) in dem Wandungsbereich (7) vorgesehen sind.

17. Installationsteil nach Anspruch 16, **dadurch gekennzeichnet, dass** die Eingriffskonturen (8) über von dem Wandungsbereich (7) abragende Stege (12) mit dem Dom (13) verbunden sind.

18. Installationsteil nach einem der Ansprüche 16 oder 17, **dadurch gekennzeichnet, dass** vom Dom (13) jeweils zwischen benachbarten Eingriffskonturen (8) Stege (14) abragen, die mit dem Wandungsbereich (7) verbunden sind.

19. Installationsteil nach einem der Ansprüche 13 bis 18, **dadurch gekennzeichnet, dass** das Installationsteil (2) eine im Querschnitt runde, hülsenartige Tülle ist, die zum Anschluss oder zur Durchführung von Rohren (3) oder Schläuchen dient, wobei der ausbrechbare Wandungsbereich (7) den Boden der Tülle bildet.

20. Installationsteil nach Anspruch 19, **dadurch gekennzeichnet, dass** die Eingriffskonturen (8) außenseitig des Bodens offen sind und innenseitig die Versteifungsteile und der Dom (13) abragen.

21. Installationsteil nach einem der Ansprüche 1 bis 20, **dadurch gekennzeichnet, dass** das Installationsteil (1,2) einstückig aus Kunststoff geformt ist.

22. Installationsteil nach einem der Ansprüche 1 bis 21, **dadurch gekennzeichnet, dass** die Sollbruchstelle (6) durch eine durchgehende materialverdünnte Zone gebildet ist.

23. Installationsteil nach einem der Ansprüche 1 bis 22, **dadurch gekennzeichnet, dass** mindestens die Sollbruchstelle (6), vorzugsweise auch die neben der Sollbruchstelle (6) befindliche Wandungszone und/oder die neben der Sollbruchstelle (6) befindliche Zone des Wandungsbereiches (7) mit einem weichelastischen Kunststoff überdeckt ist, der auf den harten Kunststoff angeformt ist.

24. Installationsteil nach einem der Ansprüche 1 bis 23, **dadurch gekennzeichnet, dass** die Sollbruchstelle (6) durch einen weichelastischen Kunststoff (15) gebildet ist, der an die Kanten der Wandung (4,5) und des Wandungsbereiches (7) aus hartem Kunststoff angeformt ist.

25. Installationsteil nach Anspruch 24, **dadurch gekennzeichnet, dass** die Randkanten der Wandung (4,5) und des Wandungsbereiches (7) einstückig durch Stege aus hartem Kunststoff verbunden sind, die in den weichelastischen Kunststoff, der die Sollbruchstelle (6) bildet, eingebettet und/oder von diesem überdeckt sind.

26. Installationsteil nach einem der Ansprüche 1 bis 5, **dadurch gekennzeichnet, dass** die Wandung (4,5) aus gegenüber dem Wandungsbereich (7) unterschiedlichem Kunststoffmaterial besteht.

27. Installationsteil nach einem der Ansprüche 1 bis 26, **dadurch gekennzeichnet, dass** die Wandung (4,5) im Bereich der Sollbruchstelle (6) einen Kragen (16) aufweist, der bei entferntem Wandungsbereich (7) einen Rastbereich bildet, an dem der Mantel eines mit Außenrippen versehenen, eingesteckten oder durchgesteckten Rohres des Schlauches (3) verrastbar ist.

28. Installationsteil nach Anspruch 27, **dadurch gekennzeichnet, dass** der Kragen (16) an seinem freien Ende eine Schicht aus weichem Kunststoff (15) aufweist.

## Claims

1. Installation part (1,2), in particular for electrical installations, for introducing or leading through at least one empty conduit (3), whereby the installation part (1,2) has at least one wall (4,5) with at least one wall region (7) enclosed by a predetermined breaking point (6), which, by separating the wall region (7), forms an inlet or passage for a conduit (3), whereby the wall region (7) has at least one engagement contour (8) for a tool (9), in particular the blade of a screwdriver, to break out the wall region (7), whereby the wall region has a stiffener (7), by means of which the effective force of the tool (9) in its engaging position extends to a large surface area of the wall region (7), **characterized by** that the engagement contour (8) is reinforced by a cup-like pocket (11) whose depth corresponds to the nominal depth of penetration of the tool (9), and the wall of the pocket, which is also closed by a bottom part, forms a stiffener, which leads to an effective transfer of force from the tool to the surface area.

2. Installation part according to claim 1, **characterized by** that the engagement contour (8) is encompassed by a stiffening collar (10).

3. Installation part according to one of claims 1 or 2, **characterized by** that the stiffening is formed by at least one material web (12) connecting to the engagement contour (8) or to the stiffening collar (10) of the engagement contour (8) or to a cup-like pocket (11) complementing the engagement contour (8), whereby the material web extends across at least part of the wall region (7).

4. Installation part according to claim 3, **characterized by** that the engagement contours (8) is formed out-of-centre on a circular wall region (7), and the material web (12) runs aligned radially across the centre of the wall region (7) to the opposite edge of the wall region (7).

5. Installation part according to claim 3, **characterized by** that the engagement contour (8) is formed centrally on a circular wall region (7), and several material webs (12) run aligned crosswise in the direction of the edge of the wall region (7).

6. Installation part according to one of the claims 1 through 5, **characterized by** that, formed in the wall (4) there are two wall regions (7) each enclosed by predetermined break points (6) with one engagement contour (8) each for a tool (9), which overlap each other, whereby a first knockout circular wall region (7) has a diameter such that a hose (3) or a tube with a first diameter can be inserted into the cut-out obtained when the first wall region (7) is knocked out, whereby the first knockout wall region (7) is enclosed by the contour of the second circular wall region (7), whose diameter is such that a hose (3) or tube with a second diameter larger than the first diameter, can be inserted into the cut-out formed when the second wall part (7) is knocked out.

7. Installation part according to claim 6, **characterized by** that the predetermined break points (6) for knocking out the first and second wall regions (7) are aligned eccentrically to each other, so that they merge into each other at one of the circumferential areas, while the distance between the opposing circumferential areas is their greatest distance apart.

8. Installation part according to one of claims 6 or 7, **characterized by** that the engagement contour (8) on the first wall region (7) in centrally formed on the same.

9. Installation part according to one of claims 6 or 7, **characterized by** that the engagement contour (8) on the first wall region (7) is formed off-centre on the same, in particular near the circumferential area, which forms the largest distance to the circumferential area of the second wall region (7).

10. Installation part according to one of claims 6 through 9, **characterized by** that the engagement contour (8) on the second wall region (7) is formed in that region which forms the greatest distance to the first wall region (7).

11. Installation part according to one of claims 6 through 10, **characterized by** that the engagement contour (8) on the second wall region (7) is reinforced by a stiffening in the form of a sickle-shaped rib, which extends in circumferential direction near the predetermined breaking point (6) or immediately adjacent to the predetermined breaking point (6) between the first and second wall region (7), preferably across about half of the circumference.

12. Installation part according to one of claims 1 through 11, **characterized by** that the installation part (1) is a flush-mounted box for electrical installations, the sheath of which forms the wall (4), which has the wall regions (7) enclosed by predetermined breaking points (6).

13. Installation part according to one of claims 1 through 5, **characterized by** that the wall region (7) has a centrally positioned dome (13) and is formed in a circular shape.

14. Installation part according to claim 13, **characterized by** that at least one engagement contour (8) is formed centrally in the wall region (7) and traverses the dome (13), whereby the areas of the engagement contour (8) that laterally protrude beyond the dome (13) are attached by means of pocket-like walls attached to the dome (13) and the wall region (7).

15. Installation part according to claim 14, **characterised by** that the walls (11) laterally attached to the dome (13) additionally feature transversely downward extending stiffening ribs (12), which are also connected to the wall region (7).

16. Installation part according to claim 13, **characterised by** that several engagement contours (8) are provided distributed around the dome (13) in the wall region (7).

17. Installation part according to claim 16, **characterized by** that the engagement contours (8) are connected to the dome (13) via webs (12) extending downwards from the wall region (7).

18. Installation part according to one of claims 16 or 17, **characterized by** that webs (14), which are connected to the wall region (7), extend downwards from the dome (13) respectively between neighbouring engagement contours (8).

19. Installation part according to one of claims 13 through 18, **characterized by** that the installation part (2) is a sleeve-type socket with a round cross-section, which serves to connect or pass through tubes (3) or hoses, whereby the knockout wall region (7) forms the bottom of the socket.

20. Installation part according to claim 19, **characterized by** that the engagement contours (8) are open on the outside of the bottom and that on the inside the stiffening parts and the dome (13) extend downwards.

21. Installation part according to one of claims 1 through 20, **characterized by** that the installation part (1,2) is formed of plastic in one piece.

22. Installation part according to one of claims 1 through 21, **characterized by** that the predetermined breaking point (6) is formed by a continuous thinned zone of the material.

23. Installation part according to claims 1 through 22, **characterized by** that at least the predetermined breaking point (6), preferably also the wall zone adjacent to the predetermined breaking point (6) and/or the wall region (7) adjacent to the predetermined breaking point (6) is covered by a soft flexible plastic, which is moulded on to the hard plastic.

24. Installation part according to claims 1 through 23, **characterized by** that the predetermined breaking point (6) is formed by a soft flexible plastic (15) which is moulded on to the edges of the wall (4,5) and the wall region (7) made of hard plastic.

25. Installation part according to claim 24, **characterised by** that the edges of the wall (4,5) and the wall region (7) are connected in one piece by means of webs made of hard plastic, which are embedded in the soft flexible plastic, which forms the predetermined breaking point (6), and/or which are covered by it.

26. Installation part according to one of claims 1 through 5, **characterized by** that the wall (4,5) is formed of plastic material that differs from that of the material of the wall region (7).

27. Installation part according to one of claims 1 through 26, **characterized by** that the wall (4,5) in the area of the predetermined breaking point (6) has a collar (16), which, when the wall region (7) is removed, forms a locking area, to which the sheath of an inserted or passed-through tube featuring outer ribs can be locked into place.

28. Installation part according to claim 27, **characterised by** that the free end of the collar (16) has a layer of soft plastic (15).

## Revendications

1. Pièce d'installation (1,2), en particulier destinée à des installations électriques pour introduire ou faire passer au moins un tube vide (3), la pièce d'installation (1,2) présentant au moins une paroi (4,5) dotée d'au moins une zone de paroi (7) entourée d'un point de rupture (6) qui par la découpe de la zone de paroi (7) forme une entrée ou un passage pour un tube vide (3), la zone de paroi (7) présentant au moins un contour de prise (8) pour un outil (9), en particulier la lame d'un tournevis pour détacher la zone de paroi (7), la zone de paroi (7) présentant un renfort qui au niveau de la position d'attaque permet à l'action de l'outil (9) de s'étendre sur une grande surface de la zone de paroi (7), **celle-ci se caractérisant par le fait que** le contour de prise (8) est renforcé par une poche en forme de cuvette (11) dont la profondeur correspond à la profondeur de pénétration de consigne de l'outil (9) et que la paroi de la poche qui est également fermée par un fond, constitue un renforcement, ce qui conduit à une transmission efficace de la force de l'outil vers la zone de surface.

2. Pièce d'installation conformément à la revendication 1, **celle-ci se caractérisant par le fait que** le contour de prise (8) est entouré d'une collerette de renfort (10).

3. Pièce d'installation conformément à l'une des revendications 1 ou 2, **celle-ci se caractérisant par le fait que** le renfort est au moins formé par une nervure de renforcement (12) qui est reliée au contour de prise (8) ou à une collerette de renfort (10) du contour de prise (8) ou à une poche de type cuvette (11) venant compléter le contour de prise (8), la nervure de renforcement s'étendant sur au moins une partie de la zone de paroi (7).

4. Pièce d'installation conformément à la revendication 3, **celle-ci se caractérisant par le fait que** les contours de prise (8) sont formés de manière excentrée au niveau d'une zone de paroi de forme circulaire (7) et que la nervure de renforcement (12) court de manière radiale par le centre de la zone de paroi (7) en direction du bord opposé de la zone de paroi (7).

5. Pièce d'installation conformément à la revendication 3, **celle-ci se caractérisant par le fait que** le contour de prise (8) est formé de manière centrée au niveau d'une zone de paroi de forme circulaire (7) et que plusieurs nervures de renforcement (12) courent de manière croisée en direction du bord de la zone de paroi (7).

6. Pièce d'installation conformément à l'une des revendications 1 à 5, **celle-ci se caractérisant par le fait que** deux zones de paroi (7) respectivement entourées de points de rupture (6) sont respectivement formées par un contour de prise (8) prévu pour un outil (9) dans la paroi (4), les zones de paroi se chevauchant, une première zone de paroi circulaire détachable (7) présentant un tel diamètre que dans la découpure créée par la première zone de paroi détachée (7), on peut insérer un tuyau (3) ou un tube ayant le première diamètre, la première zone de paroi (7) détachable étant entourée du contour de la seconde zone de paroi circulaire (7) dont le diamètre est conçu de telle sorte que dans la découpure créée par le second élément de paroi détaché (7), on peut insérer un tuyau (3) ou un tube présentant un second diamètre qui est supérieur au premier diamètre.

7. Pièce d'installation conformément à la revendication 6, **celle-ci se caractérisant par le fait que** les points de rupture (6) destinés à détacher la première et la seconde zone de paroi (7) sont orientés de manière excentrée les uns par rapport aux autres, de telle sorte qu'ils se confondent au niveau d'une zone de circonférence et que dans cette zone de circonférence opposée ils présentent le plus grand écart les uns par rapport aux autres.

8. Pièce d'installation conformément à l'une des revendications 6 ou 7, **celle-ci se caractérisant par le fait qu'au** niveau de la première zone de paroi (7) le contour de prise (8) est formé de manière centrée par rapport à celle-ci.

9. Pièce d'installation conformément à l'une des revendications 6 ou 7, **celle-ci se caractérisant par le fait qu'au** niveau de la première zone de paroi (7) le contour de prise (8) est formé de manière excentrée par rapport à celle-ci, en particulier à proximité de la zone de circonférence qui avec la zone de circonférence de la seconde zone de paroi (7) forme le plus grand écart.

10. Pièce d'installation conformément à l'une des revendications 6 à 9, **celle-ci se caractérisant par le fait que** le contour de prise (8) au niveau de la seconde zone de paroi (7) est formée dans la zone qui avec la première zone de paroi (7) constitue le plus grand écart.

11. Pièce d'installation conformément à l'une des revendications 6 à 10, **celle-ci se caractérisant par le fait que** le contour de prise (8)au niveau de la seconde zone de paroi (7) est renforcé par un renfort ayant la forme d'une nervure en forme de faucille, celle-ci s'étendant à proximité du point de rupture (6) ou directement à côté du point de rupture (6), entre la première et la seconde zone de paroi (7) dans le sens de la circonférence, de préférence sur approximativement la moitié de la circonférence.

12. Pièce d'installation conformément à l'une des revendications 1 à 11, **celle-ci se caractérisant par le fait que** la pièce d'installation (1) est une boîte d'encastrement destinée à des installations électriques dont la gaine forme la paroi (4), celle-ci présentant les zones de paroi (7) entourées de points de rupture (6).

13. Pièce d'installation conformément à l'une des revendications 1 à 5, **celle-ci se caractérisant par le fait que** la zone de paroi (7) présente au centre un dôme (13) et qu'elle a une forme circulaire.

14. Pièce d'installation conformément à la revendication 13, celle-ci **se caractérisant par le fait qu'**au moins un contour de prise (8) est formé au centre de la zone de paroi (7) et qu'il croise le dôme (13), les zones du contour de prise (8) qui dépassent latéralement le dôme (13) étant raccordées par des parois (11) de type cuvette, celles-ci étant reliées au dôme (13) et à la zone de paroi (7).

15. Pièce d'installation conformément à la revendication 14, **celle-ci se caractérisant par le fait que** les parois (11) reliées latéralement au dôme (13) présentent en outre des nervures de renforcement (12) qui dépassent de manière transversale, celles-ci étant également reliées à la zone de paroi (7).

16. Pièce d'installation conformément à la revendication 13, **celle-ci se caractérisant par le fait que** l'on a prévu plusieurs contours de prise (8) dans la zone de paroi (7), ceux-ci étant répartis autour du dôme (13).

17. Pièce d'installation conformément à la revendication 16, **celle-ci se caractérisant par le fait que** les contours de prise (8) sont reliés au dôme (13) au moyen de nervures (12) dépassant la zone de paroi (7).

18. Pièce d'installation conformément à l'une des revendications 16 ou 17, **celle-ci se caractérisant par le fait que** respectivement entre des contours de prise voisins (8) des nervures (14) dépassent du dôme (13), celles-ci étant reliées à la zone de paroi (7).

19. Pièce d'installation conformément à l'une des revendications 13 à 18, **celle-ci se caractérisant par le fait que** la pièce d'installation (2) est un embout ayant une section ronde, de type douille, celle-ci servant au raccordement ou au passage de tubes (3) ou de tuyaux, la zone de paroi détachable (7) formant le fond de l'embout.

20. Pièce d'installation conformément à la revendication 19, **celle-ci se caractérisant par le fait que** les contours de prise (8) à l'extérieur du fond sont ouverts et qu'à l'intérieur les éléments de renfort et le dôme (13) dépassent.

21. Pièce d'installation conformément à l'une des revendications 1 à 20, **celle-ci se caractérisant par le fait que** la pièce d'installation (1,2) est intégralement formée en plastique.

22. Pièce d'installation conformément à l'une des revendications 1 à 21, **celle-ci se caractérisant par le fait que** le point de rupture (6) est formée par une zone continue présentant une fine couche de matériau.

23. Pièce d'installation conformément à l'une des revendications 1 à 22, **celle-ci se caractérisant par le fait qu'**au moins le point de rupture (6), de préférence également la zone de paroi qui se trouve à proximité du point de rupture (6) et/ou la partie de la zone de paroi (7) qui se trouve à proximité du point de rupture (6) soit recouvert d'une matière plastique souple et élastique qui est moulé sur le plastique dur.

24. Pièce d'installation conformément à l'une des revendications 1 à 23, **celle-ci se caractérisant par le fait que** le point de rupture (6) est formé par une matière plastique souple et élastique (15) qui est moulé sur les bords de la paroi (4, 5) et à la zone de paroi (7) en plastique dur.

25. Pièce d'installation conformément à la revendication 24, **celle-ci se caractérisant par le fait que** les bords marginaux de la paroi (4,5) et de la zone de paroi (7) sont solidairement reliés par des nervures en plastique dur qui s'intègrent dans une matière plastique souple et élastique qui constitue le point de rupture (6) et/ou qui sont recouvertes par celui-ci.

26. Pièce d'installation conformément à l'une des revendications 1 à 5, **celle-ci se caractérisant par le fait que** la paroi (4,5) se compose d'un matériau synthétique qui par rapport à la zone de paroi (7) est différent.

27. Pièce d'installation conformément à l'une des revendications 1 à 26, **celle-ci se caractérisant par le fait que** la paroi (4,5) présente dans la zone du point de rupture (6) une collerette (16) qui au niveau de la zone de paroi détachée (7) forme une partie d'encliquetage sur laquelle on peut fixer la gaine d'un tube du tuyau (3) doté de nervures externe et qui est inséré ou qui passe à travers.

28. Pièce d'installation conformément à la revendication 27, **celle-ci se caractérisant par le fait que** la collerette (16) présente à son extrémité libre une couche un plastique souple (15).
